# EUROPEAN PATENT APPLICATION

(11) **EP 1 550 950 A1**
(43) Date of publication of application: **06.07.2005**
(21) Application number: 02770197.8
(22) Date of filing: 13.09.2002
(51) Int. Cl.: G06F 11/00, G06F 9/32, G06F 9/34, H03K 19/177

(54) **SEMICONDUCTOR DEVICE**

(71) Applicant: Hitachi Ltd., Tokyo 100-8280 (JP)
(72) Inventor: TANAKA, Hiroshi, c/o Central Research Laboratory, Kokubuni-shi, Tokyo 185-8601 (JP)
(74) Representative: Beetz & Partner Patentanwälte
(86) International application number: PCT/JP2002/009437
(87) International publication number: WO 2004/025468

(57) **Abstract**

A semiconductor device having a dynamically-reconfigurable circuit mounted thereon for maintaining software compatibility independently of the arrangement of the dynamically-reconfigurable circuit is provided.

Simultaneously with execution of software, the semiconductor device automatically generates data for reconfiguring the dynamically-reconfigurable circuit and driver software for operating the dynamic circuit, and replaces an original program with it.

In this way, by keeping the software compatibility, existing software resources can be commonly used and the same software can be employed for various devices.

## Description

### TECHNICAL FIELD

The present invention relates to an arrangement of a semiconductor device having a dynamically-reconfigurable circuit mounted thereon, and also to a method for applying the semiconductor device.

### BACKGROUND ART

In these years, as information processing device is spread and grows higher in performance, various application software programs have come along, and these software programs are predominantly described in a software manner and executed by a general processor. However, some of these application programs require the general processor to have a higher processing ability, that is, the processing ability of the processor is required to be enhanced.

For the purpose of enhancing the processing ability of the general processor, there is an example wherein an exclusive circuit specialized in a specific application program in addition to the general processor is mounted in the form of a single chip on the general processor. Other examples wherein the aforementioned exclusive circuit is formed as a dynamically-reconfigurable circuit (which will be referred to as DRC, hereinafter), are disclosed in JP-A-10-4345 and JP-A-10-335462.

In such prior arts, DRC reconfiguration data is previously prepared when the application software is produced. In this case, by reconfiguring the DRC using the DRC reconfiguration data, the DRC reconfiguration data functions as an exclusive circuit for the specific application program. The software to be executed by the general processor includes the DRC reconfiguration data and a reconfiguration instruction.

Thus, when the general processor reconfigures the DRC while executing the application and functions as an exclusive circuit, the processing ability of the processor can be enhanced.

The inventors of the present application have found, in such an arrangement that the DRC reconfiguration data and the driver software are previously prepared according to the DRC and chip arrangement and the DRC reconfiguration instruction and the DRC reconfiguration data are described in the software like the above prior arts, a problem that a chip having a different architecture of the DRC cannot execute the software. This means that the scope of software applicable is limited by the architecture of the DRC. In other words, there occurs such a situation that the processor software has the same instruction set but cannot be used due to the different DRC architecture.

It is an object of the present invention to provide a semiconductor integrated circuit device which can improve its processing ability by using a DRC and also can secure software compatibility independently of the arrangement of the DRC.

### DISCLOSURE OF THE INVENTION

Typical ones of inventions disclosed in the present application will be summarized and briefly explained as follows.

A semiconductor device for executing software including an arithmetic instruction has an arithmetic circuit including a plurality of arithmetic cells and a plurality of register cells for setting a calculation type to be executed by the arithmetic cells and wiring connections between the plurality of arithmetic cells and the plurality of register cells, and a control circuit for generating set data for setting the calculation type of the arithmetic cells and the wiring connections and also generating driver software for performing operation equivalent to the software using the arithmetic circuit on the basis of the software.

In this invention, the calculation type includes logical operation such as logical addition (OR), logical product (AND) or exclusive OR, arithmetic operation such as addition, subtraction, multiplication and division, and comparison operation. With such an arrangement, the driver software can be generated by the semiconductor device and software compatibility can be secured. Further, by generating the driver software during execution of the software, high-speed processing using the arithmetic circuit can be attained and the overhead of the driver software creation can be transparent to the user.

A semiconductor device for executing software including an arithmetic instruction has a register, an ALU, an arithmetic circuit including a plurality of arithmetic cells and a plurality of register cells for setting an calculation type to be executed by the arithmetic cells and wiring connections between the plurality of arithmetic cells and the plurality of register cells, a first memory area for storing the software, a second memory area for storing driver software for performing operation equivalent to the software, and a control circuit for controlling the software to be executed. In the invention, processing of the software is repeated n times, the processing thereof from the first time to the i-th time (i<n) is carried out by executing the software read out from the first memory area using the register and the ALU, the control circuit in response to the first time processing switches the software to be executed to the driver software, and the processing from the (i+1)-th time to the n-th time is carried out by executing the driver software read out from the second memory area using the arithmetic circuit. Since such software and driver software are stored in different memory areas and the control circuit switches between the software and the driver software, software compatibility can be secured.

Such an arrangement is effective especially for software to be repeated a plurality of times (e.g., software forming a loop), and such a loop often appears in image processing or audio processing.

### BRIEF DESCRIPTION OF THE DRAWINGS

FIG. 1 is a block diagram of an arrangement of a semiconductor integrated circuit device in accordance with the present invention;
FIG. 2 shows timing of generation and execution of DRC driver SW;
FIG. 3 is a block diagram of an exemplary arrangement of a DRC;
FIG. 4 is a block diagram of an exemplary arrangement of an input/output register cell IORC as a constituent element of the DRC;
FIG. 5 is a block diagram of an exemplary arrangement of an arithmetic cell CC as a constituent element of the DRC;
FIG. 6 is a block diagram of an exemplary arrangement of a reconfiguration decision unit CDU;
FIG. 7 is a flow chart showing the operation of the reconfiguration decision unit CDU;
FIG. 8(A) is normal SW;
FIG. 8(B) is normal SW extracted from the normal SW by an HW/SW generation unit GU;
FIG. 8(C) is DRC driver SW generated by the HW/SW generation unit GU;
FIG. 8(D) is a list of operations of instructions in a program;
FIG. 9 is a flow chart showing the operation of the HW/SW generation unit GU;
FIG. 10 is an example of a CDFG;
FIG. 11 is an example of the CDFG when compression is carried out;
FIG. 12 is an example of the CDFG when scheduling is carried out using an ALAP (As Late As Possible) algorithm;
FIG. 13 is an example of the CDFG when scheduling is carried out using an ASAP (As Soon As Possible) algorithm;
FIG. 14 is a block diagram of another arrangement of the semiconductor integrated circuit device in accordance with the present invention; and
FIG. 15 is a block diagram of a further arrangement of the semiconductor integrated circuit device in accordance with the present invention.

### BEST MODE FOR CARRYING OUT THE INVENTION

Typical embodiments of the present invention will be explained in detail with reference to the accompanying drawings. In the following explanation, constituent elements having the same or similar functions are denoted by the same reference numerals or symbols.

In the present invention, DRC driver software (which will be referred to as DRC driver SW, hereinafter) for causing the DRC to execute part of the application software is automatically generated from application software (which will be referred to normal SW, hereinafter) to be executed by a general processor without using a DRC, and the general processor replaces part of normal SW with the DRC driver SW and then execute it. As a result, the processing ability of the invention can be improved.

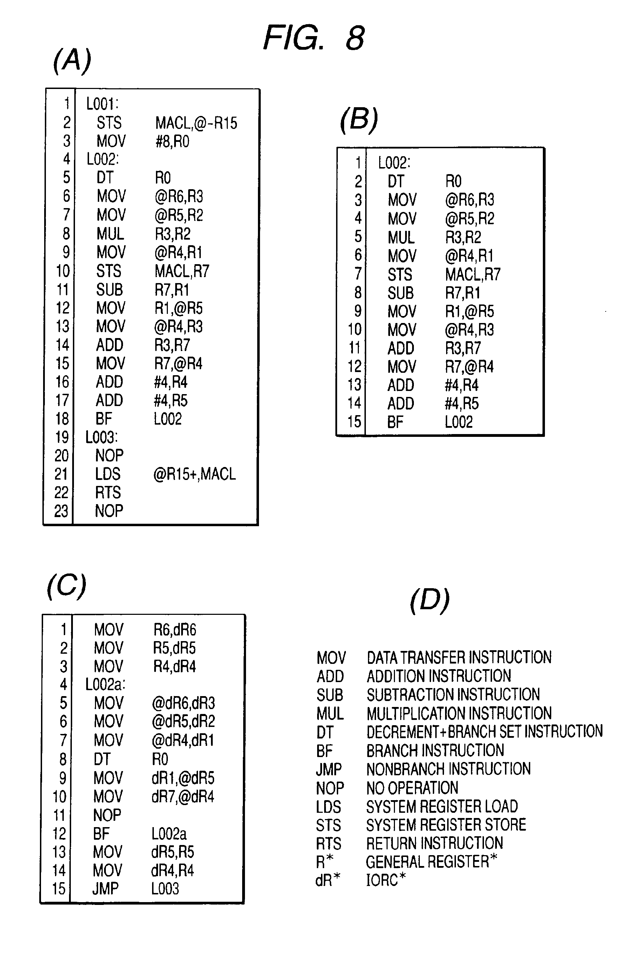

A relationship between the normal SW and the DRC driver SW will be explained by referring to FIGS. 8(A) to 8(D). An example of FIG. 8(A) is part of a program for fast Fourier transformation. The fast Fourier transformation is an operation often used in multimedia processing. A program of FIG. 8(A) is described by a set of instructions for the general processor. The meanings of the instructions in the program are shown in FIG. 8(D). However, it will be obvious from the following explanation that the instruction set used in FIG. 8 is given merely as an example and the present invention is not limited to the specific instruction set.

In the present embodiment, software part (loop) of the normal SW to be repetitively executed is executed by the DRC. This is because, for automatically generating the DRC driver SW during execution of the normal SW, it is considered efficient for the DRC to execute the software part to be executed a plurality of times. In the example of FIG. 8(A), the above software part corresponds a program from line 4 to line 18 (see FIG. 8(B)).

On the basis of the normal SW of FIG. 8(B), the present invention generates DRC reconfiguration data and DRC driver SW (FIG. 8(C)). The DRC reconfiguration data is for setting the DRC to cause the DRC to execute the program of FIG. 8(B). The DRC driver SW is a program which executes an instruction in the normal SW program incapable of being executed by the DRC, inputs data from the general processor to the DRC, and returns a result of the DRC execution to the general processor. Accordingly, in place of executing FIG. 8(B) using a general register GR and an ALU, the general processor executes FIG. 8(C) and calculates using the DRC it. As a result, the processing ability can be enhanced.

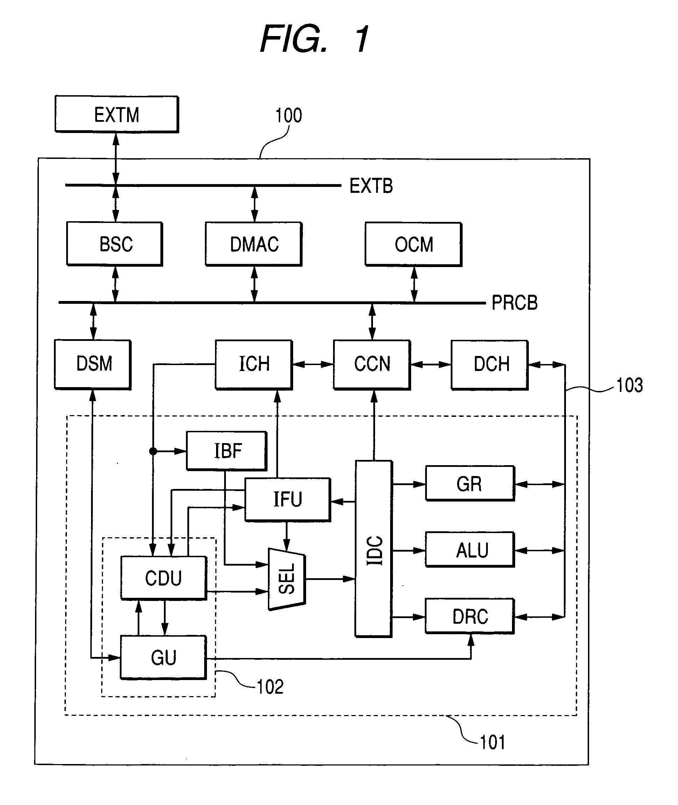

FIG. 1 shows an arrangement of an LSI chip 100 of the present invention. The LSI chip 100 includes a bus state controller BSC, a direct memory access controller DMAC, an on-chip memory OCM, a DRC driver SW storage memory DSM, an instruction cache ICH, a data cache DCH, a cache control unit CCN, and a CPU 101. The CPU 101 has a DRC control unit 102, an instruction buffer IBF, an instruction fetch unit IFU, a selector SEL, an instruction decoder IDC, a general register GR, an ALU, and a DRC. The DRC control unit 102 has a reconfiguration decision unit CDU, and a hardware/software generation unit GU (which will be referred to HW/SW generation unit, hereinafter).

An instruction to be executed by the CPU 101 is stored in the instruction cache ICH, and an instruction already stored in the instruction cache ICH according to an instruction load signal of the instruction fetch unit IFU is transferred to the instruction buffer IBF. Simultaneously with it, the reconfiguration decision unit CDU always monitors the instruction to be transferred from the instruction cache ICH to the instruction buffer IBF.

The reconfiguration decision unit CDU, in the example of FIG. 8(A), detects a branch instruction BF, extracts the software part shown in FIG. 8(B) as a program as a candidate to be executed by the DRC on the basis of the detected instruction, and stores it. When the software part to be executed by the DRC is decided, the reconfiguration decision unit CDU instructs the HW/SW generation unit GU to create DRC reconfiguration data, reconfigure the DRC and generate the DRC driver SW.

The HW/SW generation unit GU generates DRC reconfiguration data from the extracted program and performs DRC reconfiguration. The unit also generates DRC driver SW for utilizing the reconfigured DRC and stores the generated DRC driver SW in the DRC driver SW storage memory DSM. When completing these operations, the HW/SW generation unit GU informs the reconfiguration decision unit CDU of its completion and also of a leading address at which the DRC driver SW is stored.

In this connection, the normal SW is generally stored in the on-chip memory OCM or in an external memory chip EXTM.

The execution of the program by the CPU 101 is as follows. It will be explained in connection with the example of FIG. 8. First, the normal SW of FIG. 8(A) is executed as it is. After receiving the completion notification from the HW/SW generation unit GU, the reconfiguration decision unit CDU confirms the executing instruction of the normal SW to be transferred from the instruction cache ICH to the instruction buffer IBF proceeds up to a branch instruction (line 15 in FIG. 8(B) corresponding to line 18 in FIG. 8(A)) of the program to be replaced with the DRC driver SW. At this time, the reconfiguration decision unit CDU switches the selector SEL via the instruction fetch unit IFU in such a manner that an instruction is input to the instruction decoder IDC not from the instruction buffer IBF but from the reconfiguration decision unit CDU. Next, the instruction, by which the branch address of the branch instruction is converted to the leading address at which the DRC driver SW is to be stored, is output to the instruction decoder IDC via the selector SEL. In the next CPU clock cycle, the reconfiguration decision unit CDU switches the selector SEL via the instruction fetch unit IFU in such a manner that an instruction is input to the instruction decoder IDC not from the reconfiguration decision unit CDU but from the instruction buffer IBF. From now on, the DRC driver SW is executed. The last instruction of the DRC driver SW is a nonbranch instruction (line 15 in FIG. 8(C)) to an address at which the next instruction of the extracted normal SW is stored. The execution of this instruction causes return to the execution of the normal SW.

At this time, in response to the execution of the instruction decoder IDC, the storage of the instruction to the instruction cache ICH is carried out under control of the cache control unit CCN. One of features of the cache control unit CCN is that the cache control unit is arranged not only to access the on-chip memory OCM, the direct memory access controller DMAC, and bus state controller BSC as modules on a processor bus PRCB (when access is made to the external memory chip EXTM), but also to access the DRC driver SW storage memory DSM.

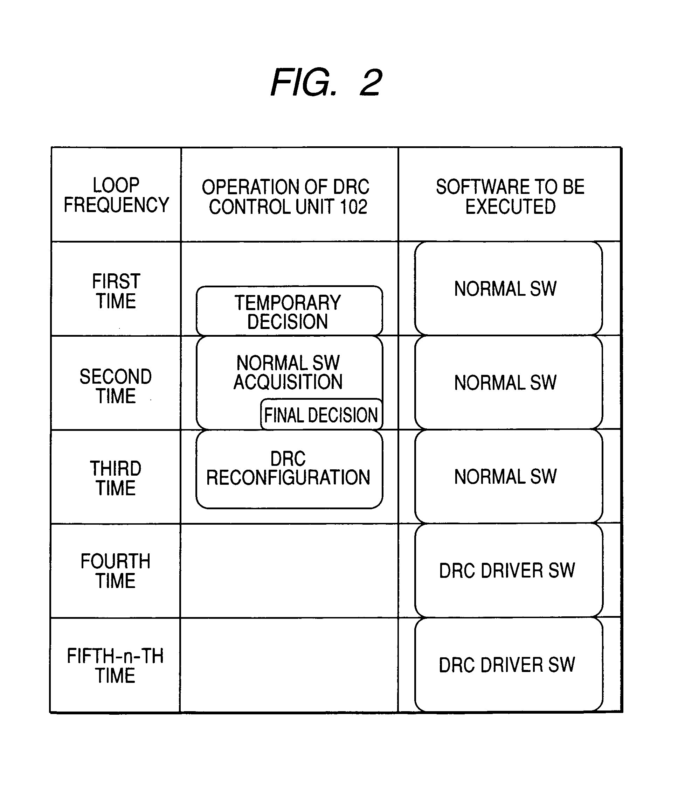

FIG. 2 shows timing of generation and execution of the DRC driver SW.

The normal SW is first executed. When a branch to an address antecedent to the address of the instruction currently being executed and stored in a program counter in the instruction fetch unit IFU took place (line 18 in FIG. 8(A)), the reconfiguration decision unit CDU temporarily decides that there is a loop in the normal SW.

The reconfiguration decision unit CDU acquires and stores instructions to be loaded to the instruction buffer IBF from the instruction cache ICH during the subsequent execution, that is, instructions of lines 4 to 18 in FIG. 8(A). When the instruction again returns to the stored head instruction according to the branch instruction, the reconfiguration decision unit decides that the instructions form a loop and determines the use of the DRC as a final decision.

The HW/SW generation unit GU creates DRC reconfiguration data, creates DRC driver SW and reconfigures the DRC in the third loop. Since the user of the DRC can be used in the third loop, the CPU 101 performs operation based on the DRC in the fourth and subsequent loops by executing the DRC driver SW, in place of the operation based on the ALU. When the DRC reconfiguration is not completed during the execution of the third loop, the CPU 101 executes the normal SW until the last loop including a time point of finishing the DRC reconfiguration.

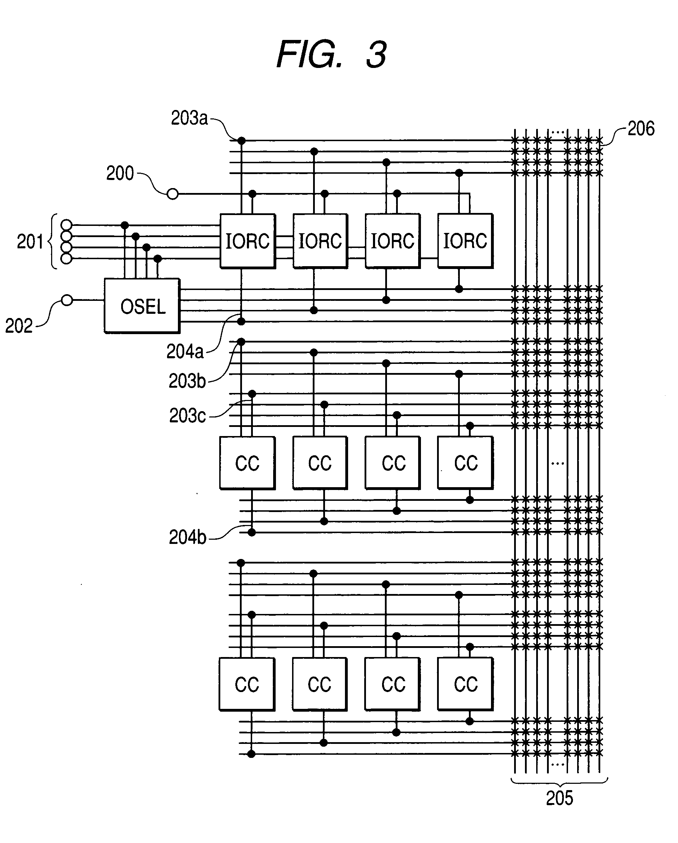

Explanation will then be made as to the structure of the DRC using FIG. 3 to FIG. 5. FIG. 3 shows an internal arrangement of the DRC. The illustrated arrangement includes input/output register cells IORCs, arithmetic cells CCs, a data input port 200 to the input/output register cells IORCs, register specify input ports 201, cell input lines 203a, 203b, 203c, a DRC data output port 202, cell output lines 204a, 204b from the respective cells, a wiring region 205, and routing program elements 206. The routing program elements 206 include switch elements for deciding connections between wiring lines in the wiring region 205 and not shown memory elements (such as SRAMs or flash memories) for storing ON/OFF states of these switch elements.

When data is input to the DRC, a register specify signal is input from the instruction decoder IDC to the register specify input port 201 to select one of the input/output register cells IORCs. The data is input from the data input port 200 and applied only to the selected input/output register cell IORC. When data is output from the DRC, the register specify signal is input from the instruction decoder IDC to the register specify input port 201. This causes an output selector OSEL to be switched, thus selecting the output of one input/output register cell IORC. The selected data is applied from the cell output line 204a to the output selector OSEL, and then output from the DRC data output port 202.

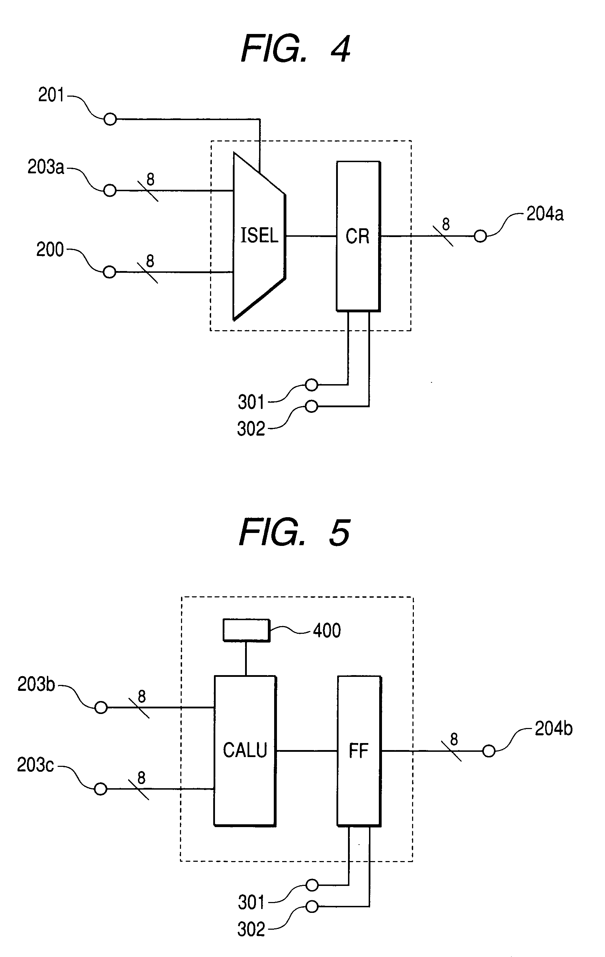

FIG. 4 shows a structure of the input/output register cell IORC in FIG. 3. The input/output register cell IORC has an input selector ISEL and a cell register CR. The input selector ISEL switches between an input of the cell input line 203a from the wiring lines and an input of the data input port 200 according to an input from the register specify input port 201. The data input via the input selector ISEL is held in the cell register CR. The cell register CR is operated in synchronism with a clock input 301 and is reset by a reset input 302. Although clock and reset lines are omitted in FIG. 3, the clock and reset lines are actually connected to all the input/output registers cell IORCs and the arithmetic cells CCs. The data held in the cell register CR is externally output from the cell output line 204a.

Though data is input or output in units of 8 bits in the present embodiment, the present invention is not limited to such 8 bit unit.

FIG. 5 shows a structure of the arithmetic cell CC in FIG. 3. The arithmetic cell CC has a cell calculation unit CALU, a flip-flop FF, and a calculation programming element 400. The cell calculation unit CALU, which has the same function as the ALU in the CPU, sets an arithmetic function to be used by the calculation programming element 400. The calculation programming element 400 sets one of logical operations including logical addition (OR), logical product (AND) and exclusive OR and of arithmetic operations including addition, subtraction, multiplication and division, and comparison operation, to be executable by the cell calculation unit CALU.

In this way, the setting of the calculation programming element 400 in the arithmetic cell CC enables the operational contents of the arithmetic cell CC to be determined. By the setting of the routing program elements 206, further, what type of data is to be input to the input/output register cell IORC and the arithmetic cell CC, or the location where the arithmetic result of the input/output register cell IORC or the arithmetic cell CC is to be output, can be set. In this way, the DRC reconfiguration data includes a set value of the calculation programming element 400 and a set value of the routing program elements 206 to execute a desired operation.

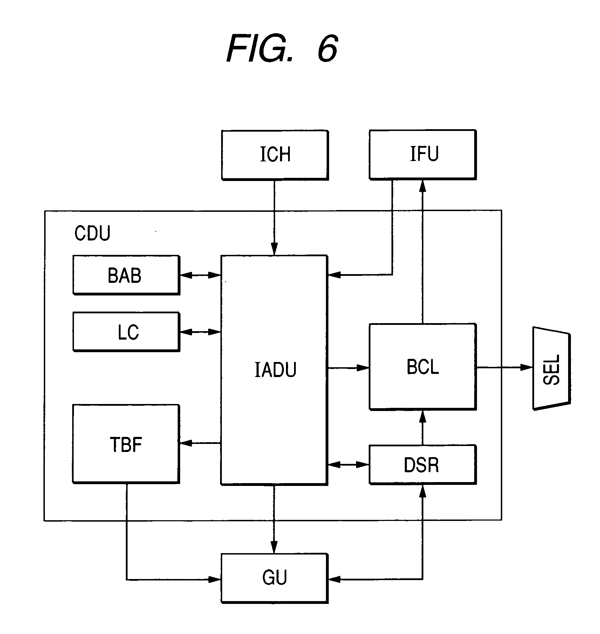

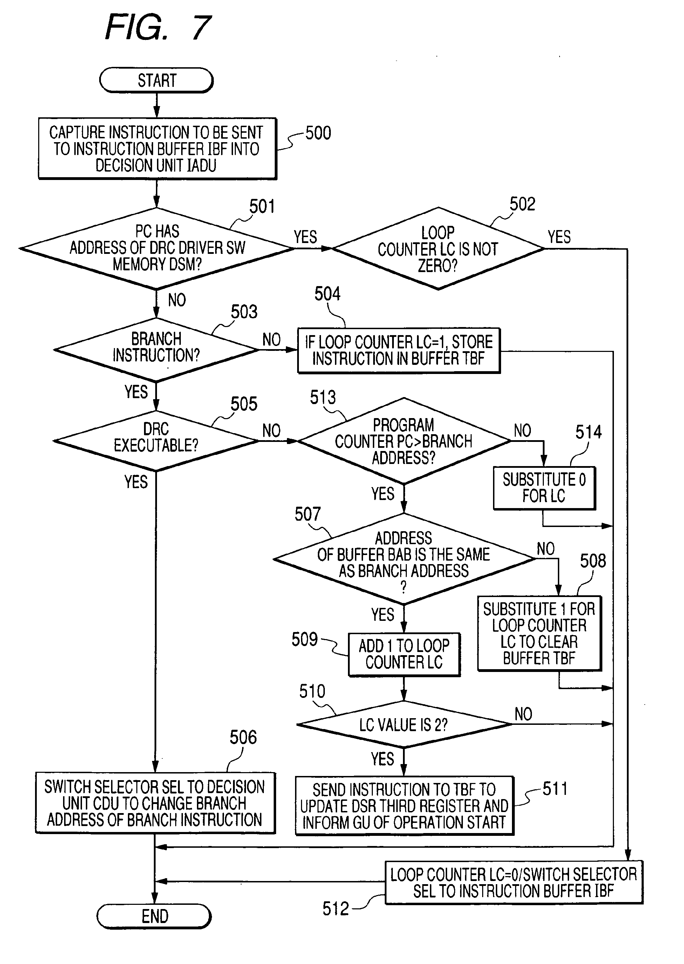

FIG. 6 shows a structure of the reconfiguration decision unit CDU, and FIG. 7 shows the operation of the reconfiguration decision unit CDU. The reconfiguration decision unit CDU has a branch address buffer BAB, a loop counter LC, an instruction address decision unit IADU, a DRC state register DSR, a normal software temporary buffer TBF, and a branch controller BCL. The DRC state register DSR further has three parts, that is, a part indicating the state of the HW/SW generation unit GU, a part for storage of a branch address to the DRC driver SW, and a part for storage of an address where an instruction next to the normal SW to be replaced with the DRC driver SW is present.

Explanation will be made as to the operation of the reconfiguration decision unit CDU by referring to FIG. 7. First, an instruction to be sent from the instruction cache ICH to the instruction buffer IBF is fetched into the instruction address decision unit IADU (step 500). The instruction address decision unit IADU extracts an address in an instruction address counter PC provided in the instruction fetch unit IFU, and decides whether or not the address of the instruction being currently executed corresponds to the address area of the DRC driver SW storage memory DSM (step 501).

When the instruction address corresponds to the address area, this means that the DRC driver SW is currently being executed. At this time, if the loop counter LC has a value other than 0 (step 502), then the instruction is an instruction (MOV instruction on line 1 in FIG. 8(C)) of line 1 in the DRC driver SW. Thus, the loop counter LC is reset to 0, and the branch controller BCL switches the selector SEL to the side of the instruction buffer IBF. When the loop counter LC has a value of 0, the branch controller BCL does not perform anything. The frequency of looping continuously executed in the normal SW is held in the loop counter LC, and the looping frequency is reset by a reset signal.

If otherwise, this means that the normal SW is currently being executed. Thus the instruction address decision unit IADU decides whether or not the instruction is a branch instruction. When the instruction is not a branch instruction and the loop counter LC has a value of 1, this means that the second loop is being executed. For this reason, for the purpose of acquiring the normal SW (refer to FIG. 2), the instruction address decision unit IADU stores the instruction in the normal software temporary buffer TBF.

In a step 505, the instruction address decision unit IADU checks the DRC state register DSR. The DRC state register DSR has a first register for indicating the state of the DRC, a second register for storing a branch address (e.g., an address at which the MOV instruction of line 1 in FIG. 8(C)) to the DRC driver SW, and a third register for storing the next address (e.g., L003 on line 19 in FIG. 8(A)) of the normal SW to be switched to the DRC driver SW. Any of three states of "DRC unavailable", "DRC in preparation", and "DRC finish preparation" is stored in the first register. In response to a CPU reset, the first register is updated to a value of "DRC unavailable". When the use preparation of the DRC is started by the HW/SW generation unit GU, the first register is updated to a value of "DRC in preparation". When the use preparation of the DRC is finished, the first register is updated to a value of "DRC finish preparation". In the "DRC finish preparation", the second register is updated. When the operation start is informed to the GU, the third register is updated.

When the first register of the DRC state register DSR has the value of "DRC finish preparation", the branch controller BCL switches the selector SEL to the reconfiguration decision unit CDU under control of the instruction fetch unit IFU, so that an output from the reconfiguration decision unit CDU is connected to the instruction decoder IDC. Thereafter, the reconfiguration decision unit CDU sends a branch instruction having a branch address changed to the leading address of the DRC driver SW in the DRC driver SW storage memory DSM.

When the first register of the DRC state register DSR has a value other than "DRC finish preparation", the reconfiguration decision unit decides a loop presence (temporary decision in FIG. 2). The instruction address decision unit IADU first compares the current instruction address counter PC with the branch address (step 513). When the branch address is larger than the instruction address counter, this means that no loop is present and thus the loop counter LC is set to 0 (step 514). When the instruction address counter PC is larger, the instruction address decision unit IADU further compares the branch address stored in the branch address buffer BAB with the branch destination of the branch instruction. The branch address buffer BAB is a buffer which overwrites the branch address when the branch instruction was executed. Thus, if the branch destination has an address equal to the address of the branch address buffer BAB, then the reconfiguration decision unit CDU determines the loop presence and shifts to generation of the DRC reconfiguration data and the DRC driver SW. More specifically, 1 is added to the loop counter LC (step 509). If the loop counter LC has a value of 2 (step 510), then the instruction address decision unit IADU stores the branch instruction in the normal software temporary buffer TBF, substitutes a value (e.g., L003 in FIG. 8(A); address of line 19) advanced by one from the current value of the instruction address counter PC for the third register of the DRC state register DSR, and sends a start signal for "DRC in preparation" to the HW/SW generation unit GU (step 511).

If the branch destination is different from the address of the branch address buffer BAB, then there is a possibility that a new loop is present. The instruction address decision unit IADU substitutes 1 for the loop counter LC and collectively clears the normal software temporary buffer TBF.

The above operation will be explained in connection with the program example of FIG. 8, as follows.

During execution of the first loop, for instructions on lines 1 to 17 in FIG. 8(A), the loop counter LC has a value of 0 and thus no execution is carried out in the flow chart of FIG. 7. When the branch instruction BF on line 18 is captured, the loop counter LC is set to 1 (step 508) and the branch address (line 4) is overwritten on the branch address buffer BAB.

During execution of the second loop, for each of the instructions of lines 5 to 17, the loop counter LC has a value of 1 and thus the instruction is stored in the normal software temporary buffer TBF (step 504). When the branch instruction BF of line 18 is captured, the branch address coincides with the address stored in the branch address buffer BAB (step 507). Thus the reconfiguration decision unit sets the loop counter LC to 2 (step 509), sends the branch instruction BF to the branch instruction BF, and instructs the HW/SW generation unit GU to start the "DRC in preparation" (steps 510 and 511).

During execution of the third loop, for each of the instructions of lines 5 to 17, since the loop counter LC has a value of 2, no operation is executed in the flow chart of FIG. 7. When the branch instruction BF of line 18 is captured and the DRC is in its available state, the execution of the subsequent loop is carried out using the DRC by changing the branch address of the branch instruction to the leading address (line 1 in FIG. 8(C)).

During the execution of the DRC driver SW, the instruction JMP (on line 15 in FIG. 8(C)) branches the reconfiguration decision unit to L003 (on line 19 in FIG. 8(A)) of the normal SW, and the unit returns to the execution of the normal SW.

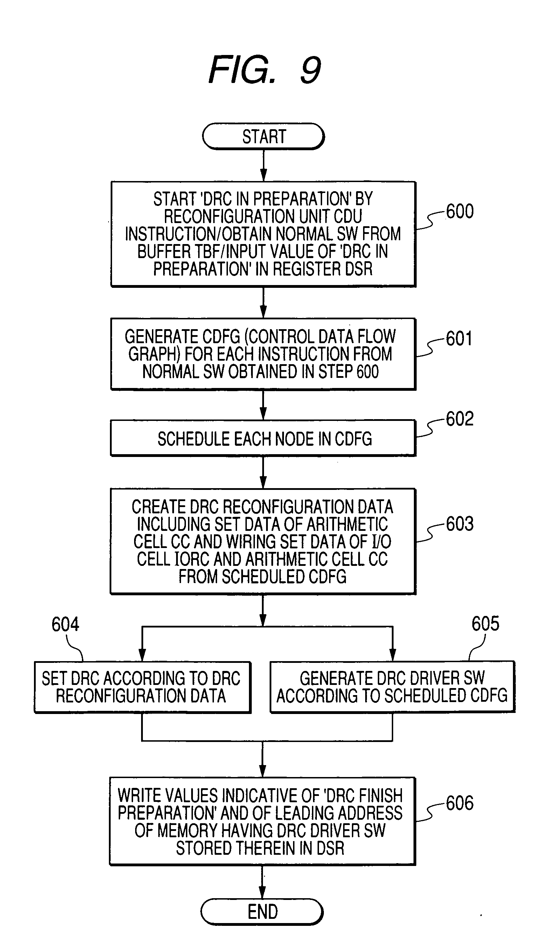

Explanation will then be made as to the operation of the HW/SW generation unit GU based on a flow chart of FIG. 9. The HW/SW generation unit GU receives an instruction from the reconfiguration decision unit CDU, acquires the normal SW (FIG. 8(B)) from the normal software temporary buffer TBF, and inputs a value of "DRC in preparation" in the first register of the DRC state register DSR (step 600).

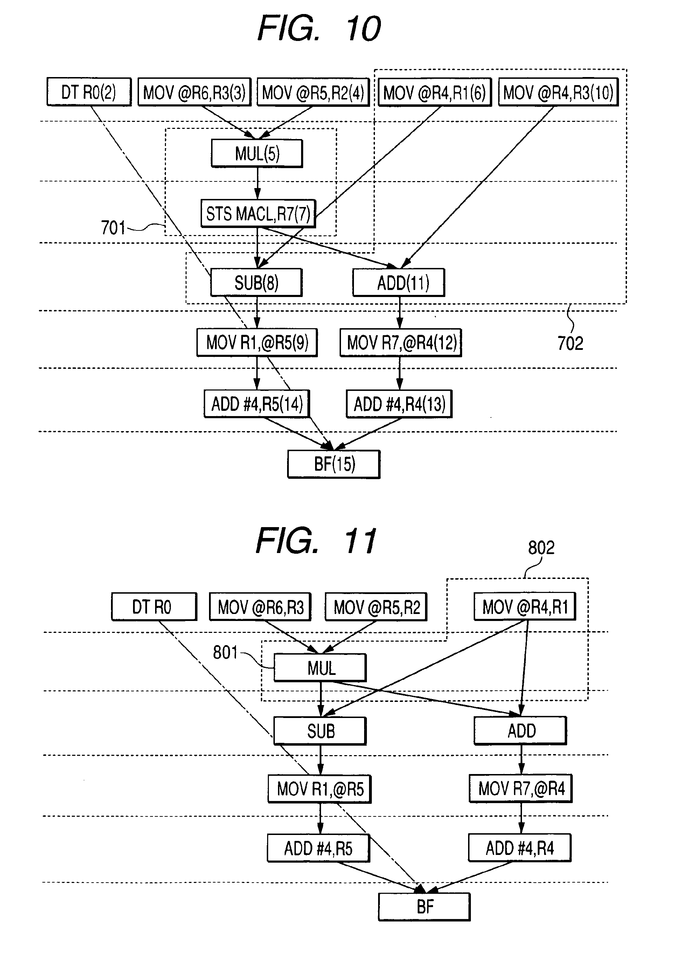

The HW/SW generation unit GU first creates such a CDFG (Control Data Flow Graph) as shown in FIG. 10 from the acquired normal SW (step 601). In the CDFG, each instruction in the input normal SW is denoted by a node (instruction) and a data dependency relationship for an instruction operand is denoted by an edge (arrow). A number in parentheses within a block in FIG. 10 denotes a corresponding line number in FIG. 8(B).

In FIG. 10, the CDFG is created as it is from the normal SW of FIG. 8(B). There are tow types of dependency relationships, that is, "control dependency relationship" and "data dependency relationship". In the "control dependency relationship", the value of a register R0 is set, e.g., by an instruction DT and the branch instruction BF is executed according to the value of the register R0. This is dependent on the instruction set of the general processor and thus the dependency relationship is required to be previously recorded. In the "data dependency relationship", operation is carried out, e.g., based on an instruction SUB using data transferred by an instruction MOV. Accordingly, decision is required to be carried out according to the contents of the program. An operand having no dependency relationship on the operands of other instructions is located at the uppermost level, and the other operands are located at lower levels according to their dependency relationships. More specifically, the "data dependency relationship" is determined as follows.

Since operands of the instructions of lines 2 to 4 and 10 have no dependency relationship on operands of instructions antecedent to the above instructions, such operands are located at the same level. "MOV @R6,R2" means 'to transfer data stored at an address instructed by a register R6 to a register R2'. That is, an instruction MOV having an operand of symbols including @ on the right side of MOV is to read external data into a register; and the operand with @ first appears in FIG. 8(B). Thus the operand is located at the highest level in the "data dependency relationship". Since an instruction MUL on line 5 uses data about the registers R2 and R3, the instruction has a dependency relationship on instructions on lines 3 and 4. Since the instruction on line 7 is used to transfer the data of a register MACL to a register R7, the execution result of the instruction MUL is input to the register MACL.

The dependency relationship is decided similarly even for a program which follows. In this connection, however, attention is required to be paid to the fact that, in the edge decision, even registers having the same register name may be updated in contents. For example, "SUB R7,R1" on line 8 means to store a difference in data between the registers R7 and R1 in the register R1. Since data is updated by the execution of the instruction of line 8, "MOV R1,@R5" on line 9 has a dependency relationship on the instruction of line 8, but has no dependency relationship on "MOV @R4,R1" of line 6.

In this way, by setting a target instruction to have a dependency relationship on one of the previously executed instructions having the same register name in operand, a CDFG can be created. When a plurality of instructions have the same register name, however, a dependency relationship is set with the instruction executed immediately before, considering the possibility that register data may be updated.

FIG. 11 is a CDFG corresponding to a compression of the CDFG of FIG. 10. The compression has an effect that the circuit configuration of the DRC can be simplified and the processing speed of the DRC can be made high.

In the first compression form, two instructions in a block 701 (see FIG. 10) are compressed into one instruction in a block 801 (see FIG. 11). An instruction STS is used to transfer data between registers without performing any arithmetic operations. Such a transfer instruction becomes necessary from the viewpoint of the structure set when the operation is processed by the general processor. However, when the operation is processed by the DRC, it is only required to connect the arithmetic cell directly with a register having necessary data stored therein. Thus it is unnecessary to reflect such an instruction on the arrangement. By previously recording such an instruction as to transfer data between registers as an instruction to be compressed, the first compression can be executed.

In a second compression form, four instructions in a block 702 (see FIG. 10) are compressed into three instructions in a block 802 (see FIG. 11). Since the operation of the general processor is carried out in a time series manner, there occurs a situation that registers have the same contents though different in register name. When the processing is carried out by the DRC, it is only required to connect the arithmetic cell with a register having necessary data stored therein. Thus it is unnecessary to reflect a difference in register name between the registers on the arrangement of the DRC. For this reason, with respect to arithmetic instructions (MUL, ADD and SUB instructions in the example of FIG. 8), the data contents of the registers are compared so that, if the registers are different but store the same data, then the instructions are compressed. For example, the operands of the instructions SUB and ADD of lines 8 and 11 use the same register R7, but use different registers R1 and R3. Since the registers have the contents of "data stored at the address instructed by the register R4" when their "data dependency relationship" is traced and examined, however, such compression as mentioned above can be realized.

Next, the HW/SW generation unit GU schedules respective nodes in the CDFG of FIG. 11 prepared in the step 601, that is, performs clock cycle allocation to execute the nodes considering the restrictions of hardware resources (step 602).

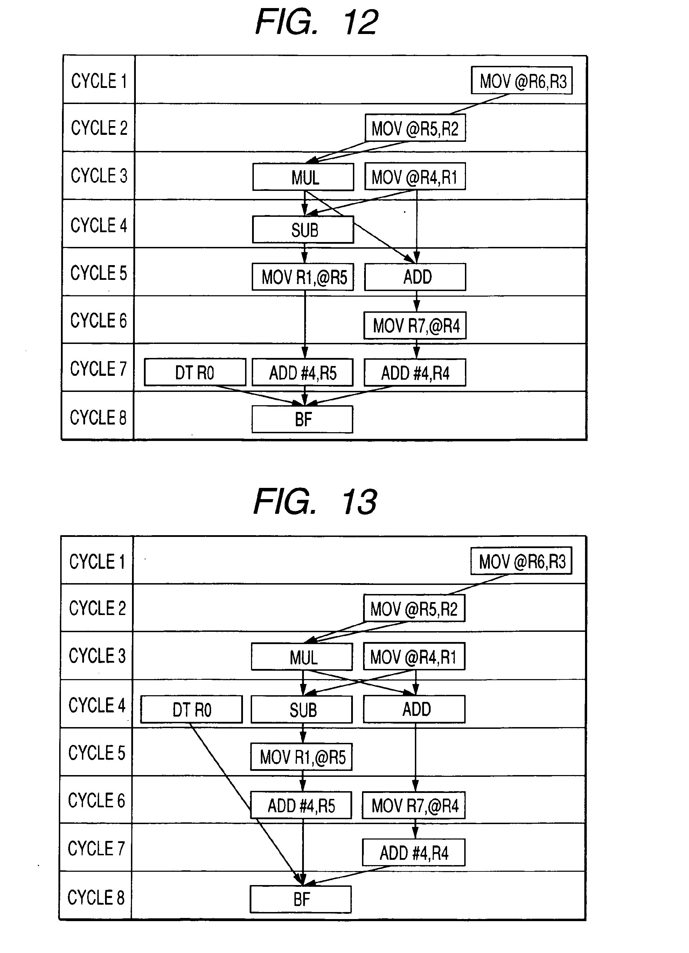

As one scheduling method, FIGS. 12 and 13 show examples when an ALAP algorithm and an ASAP algorithm are applied to the CDFG of FIG. 11. In the ALAP (As Late As Possible) algorithm, scheduling is carried out by sequentially storing simultaneously-executable instructions from the latter part. A first type of ones of instructions simultaneously unexecutable have a mutual dependency relationship. A second type of instructions can be executed only one in their cycle. The result is shown in FIG. 12.

FIG. 13 shows an example when an ASAP (As Soon As Possible) algorithm of sequentially storing simultaneously-executable instructions from the former part is applied to the scheduling of FIG. 12. A processing time can have a margin by storing instruction executing cycles as forwards as possible.

Instructions included in one cycle can be executed in one clock cycle and all the instructions can be executed in eight clock cycles 1 to 8.

The HW/SW generation unit GU creates DRC reconfiguration data according to the scheduled CDFG shown in FIG. 13, which will be detailed as follows. Node parts are allocated to the input/output register cells IORCs and the arithmetic cells CCs. The input/output register cell IORC is allocated to the instruction MOV, and the arithmetic cell CC is allocated to the arithmetic instruction. According to the contents of the arithmetic instruction, data for setting of the calculation programming element 400 for setting the calculation contents of the arithmetic cell is created. Since edges in the CDFG indicate a flow of data, the set data of the routing program elements 206 are created so that the input/output register cells IORC are wired to the arithmetic cells CCs according to the edge connection relationship of the CDFG (step 603). The set data of the calculation programming element 400 and the set data of the routing program elements 206 are DRC reconfiguration data.

The HW/SW generation unit GU reconfigures the calculation programming element 400 of the DRC and the routing program elements 206 thereof according to the DRC reconfiguration data (step 604). Concurrently with it, the HW/SW generation unit generates DRC driver SW (step 605).

How to generate DRC driver SW will be explained. The DRC driver SW shown in FIG. 8(C) is generated from the CDFG of FIG. 13.

It is first necessary to move data stored in the general register GR to the input/output register cell IORC of the DRC. For example, the instruction of "MOV @R6,R3" of line 3 in FIG. 8(B) is 'to transfer data stored at an address instructed by the general register R6 to the general register R3'. In order to execute this instruction, it is necessary to first move the data of the general register R6 into the DRC. To this end, an instruction of "MOV R6, dR6" of line 1 in FIG. 8(C) is provided. This instruction means to 'transfer the data (address) stored in the general register R6 to an input/output register cell dR6'. Such instructions are provided on lines 1 to 3 in FIG. 8(C).

Thereafter, with respect to the nodes in FIG. 13, instructions to be executed outside the DRC are provided in the DRC driver SW. Instructions of lines 5 to 12 in FIG. 8(C) correspond to nodes included in cycles 1 to 8 in FIG. 13.

The instruction of "MOV @dR6, dR3" of line 5 in FIG. 8(C) is to 'transfer data stored at an address instructed by the input/output register cell dR6 to an input/output register cell dR3', and corresponds to "MOV @R6, R3" in cycle 1 of FIG. 13. The other instructions are similar. For example, in cycle 3, there are two nodes of "MOV @R4, R1" and "MUL", and the latter instruction does not appear in the DRC driver SW because the latter is executed by the DRC. In cycle 6, further, only an instruction of "ADD" to be executed by the DRC is present. In this case, no operation instruction (NOP) is added assuming that an idle cycle is generated.

In this connection, to cause the arithmetic instructions to be executed by the DRC, data necessary for the arithmetic operation is stored not in the general register GR but in the input/output register cell IORC of the DRC. Thus, it is required to return the value after the execution of the arithmetic operation to the general register GR. To this end, instructions of lines 13 and 14 in FIG. 8(C) are provided. For example, the instruction of "MOV dR5, R5" is to 'transfer the data stored in an input/output register cell dR5 to a general register R5'.

Finally, in order to return to the execution of the normal SW, a nonbranch instruction (JMP) (of line 15 of FIG. 8(C)) to the next address of the branch instruction in the normal SW is provided. The branch destination of the nonbranch instruction is assumed to be an address stored at the third register of the DRC state register.

In this way, on the basis of the scheduled CDFG of FIG. 13, the DRC driver SW of FIG. 8(C) can be generated. When consideration is made with exclusion of external factors such as cache miss or interrupt, the original normal SW requires 14 cycles for execution of one loop, whereas, the normal SW requires 8 cycles corresponding to the core part (lines 5 to 12 in FIG. 8(C)) of the loop for the same purpose.

The generated DRC driver SW is stored in the DRC driver SW storage memory DSM. The place for the SW to be stored, for the first time, at the leading address of the DRC driver SW storage memory DSM and, for the subsequent times, the SW is written in the behind the previously-written part. When the region for the SW to be written is insufficient, the SW is written again from the leading address of the DRC driver SW storage memory DSM.

When completing the steps until the step 605, the HW/SW generation unit GU writes a value of "DRC finish preparation" in the first register of the DRC state register DSR, and writes the leading address of the memory having the DRC driver SW generated in the step 605 in the second register of the DRC state register DSR (step 606).

When the HW/SW generation unit GU is operated according to the aforementioned flow, the unit can automatically create the DRC reconfiguration data and the DRC driver SW during the program execution.

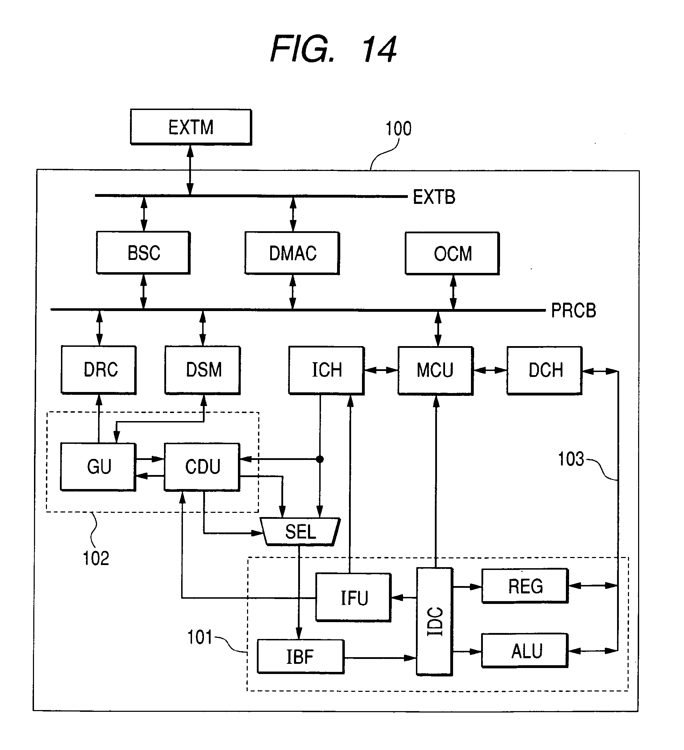

A modification of the arrangement of FIG. 1 will be explained using FIG. 14. This embodiment corresponds to an example when the DRC, the reconfiguration decision unit CDU, and the HW/SW generation unit GU in the first embodiment of FIG. 1 are separated from the CPU 101. More specifically, the DRC is connected to the processor bus PRCB, and the reconfiguration decision unit CDU directly controls the control of the selector SEL. Further, the instruction buffer IBF is located downstream of the selector SEL.

The operation of this arrangement is different from that of FIG. 1 in that access to the input/output register cell IORC of the DRC is carried out by specifying an address. For example, with respect to such an instruction as "MOV R6 dR6" of line 1 of the DRC driver SW in FIG. 8(C) for accessing the input/output register cell IORC of the DRC, since the DRC is connected directly to the processor bus PRCB, the address of the input/output register cell IORC is specified not directly but indirectly. For example, such address specification as "MOV R6 @R12" is carried out. This instruction means to transfer the data of the general register R6 to the input/output register cell IORC instructed by the general register R12.

In the modification, by providing the DRC outside of the CPU, the size of the DRC can be made larger than that of the arrangement of FIG. 1. Further, since the DRC, the reconfiguration decision unit CDU, and the HW/SW generation unit GU are separated from the CPU 101; design change can be easily realized. It is also possible for a module other than the CPU to use the DRC. The DRC can be used, for example, by a direct memory access controller DMAC which accesses the input/output register cell IORC on the DRC. In this case, operations different between the DRC and the CPU 101 can be simultaneously executed.

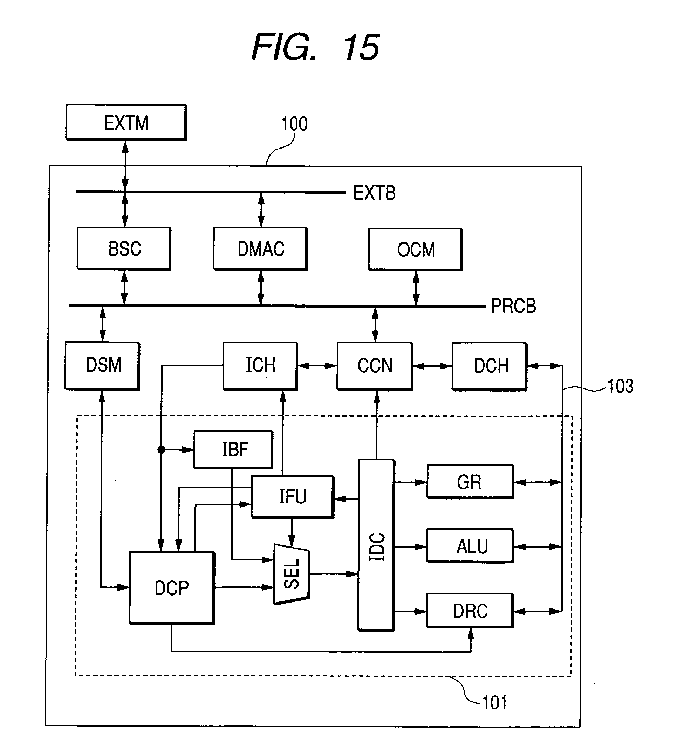

Another modification of the arrangement of FIG. 1 will be explained with use of FIG. 15. This arrangement is different from that of FIG. 1 in that the function of the DRC control unit 102 shown in FIG. 1 is realized with a DRC control exclusive processor DCP. In this arrangement, the function of the DRC control unit 102 is realized with the DRC control exclusive processor DCP, and the operations of the reconfiguration decision unit CDU and the HW/SW generation unit GU therein are implemented by software. Accordingly, only by exchanging the software of the DRC control exclusive processor DCP, the DRC control unit 102 can be easily updated and, even after manufacture of an LSI chip using this technique, the performance of the LSI can be enhanced. Of course, it is possible as an embodiment to combine the arrangement of FIG. 14 and the arrangement of FIG. 15.

In addition, the present invention can be modified in various ways. For example, the normal SW can be preliminarily executed to previously register the DRC reconfiguration data and the DRC driver SW. In this case, since the need of generating the DRC reconfiguration data and the DRC driver SW during the execution of the normal SW can be eliminated, arithmetic operation using the DRC can be carried out from the second loop.

With the arrangement of the present invention, in a semiconductor device having the processor and the DRC mounted thereon, the software can automatically generate the DRC reconfiguration data and the DRC driver SW. With such an arrangement, even when the DRC is used, the need of describing an exclusive program according to the DRC can be eliminated and software compatibility can be kept. Since software compatibility can be kept in this way, existing software resources can be commonly used, and, so long as the processor can function at least with the same instruction set, the same software can be employed.

### INDUSTRIAL APPLICABILITY

The present invention is effective especially for software to be repeated a plurality of times (such as software forming a loop), and such loop often appears in image processing or audio processing.

## Claims

1. A semiconductor device for executing software including an arithmetic instruction, comprising:
a register;
an ALU;
an arithmetic circuit including a plurality of arithmetic cells and a plurality of register cells for setting a calculation type to be executed by said arithmetic cells and wiring connections between said plurality of arithmetic cells and said plurality of register cells; and
a control circuit for generating set data for setting said calculation type of the arithmetic cells and said wiring connections and also generating driver software for performing operation equivalent to said software using said arithmetic circuit on the basis of said software.

2. A semiconductor device according to claim 1, wherein said control circuit is arranged to generate said set data and said driver software during execution of said software using said register and said ALU.

3. A semiconductor device according to claim 2, wherein processing of said software is repeated n times, the processing of said software from the first time to the i-th (i<n) time is carried out by executing said software using said register and said ALU, and the processing of the software from the (i+1)-th time to the n-th time is carried out by executing said driver software using said arithmetic circuit.

4. A semiconductor device according to claim 1, wherein said driver software includes at least a data transfer instruction from said register to the register cell of said arithmetic circuit and a data transfer instruction from the register cell of said arithmetic circuit to said register.

5. A semiconductor device according to claim 1, wherein said control circuit generates said set data and said driver software by executing the software for generating said set data and said driver software.

6. A semiconductor device according to claim 1, wherein said arithmetic circuit is connected to a bus.

7. A semiconductor device according to claim 1, wherein the number of clock cycles necessary for executing said software is smaller than the number of clock cycles necessary for executing said driver software.

8. A semiconductor device for executing software including an arithmetic instruction, comprising:
a register;
an ALU;
an arithmetic circuit includi8ng a plurality of arithmetic cells and a plurality of register cells for setting an calculation type to be executed by said arithmetic cells and wiring connections between said plurality of arithmetic cells and said plurality of register cells;
a first memory area for storing said software;
a second memory area for storing driver software for performing operation equivalent to said software; and
a control circuit for controlling the software to be executed,
wherein processing of said software is repeated n times, the processing thereof from the first time to the i-th time (i<n) is carried out by executing said software read out from said first memory area using said register and said ALU, said control circuit in response to said first time processing switches the software to be executed to said driver software, and the processing from the (i+1)-th time to the n-th time is carried out by executing said driver software read out from said second memory area using said arithmetic circuit.

9. A semiconductor device according to claim 8, wherein said control circuit generates set data for setting the calculation type of said arithmetic cell and said wiring connections on the basis of said software and driver software for performing operation equivalent to said software.

10. A semiconductor device according to claim 8, wherein said control circuit has set data for setting the calculation type of the arithmetic circuit and said wiring connections, and said arithmetic circuit sets the calculation type of said arithmetic cells and said wiring connections.

11. A semiconductor device according to claim 8, wherein said driver software includes at least a data transfer instruction from said register to the register cell of said arithmetic circuit and a data transfer instruction from the register cell of said arithmetic circuit to said register.

12. A semiconductor device according to claim 8, wherein the number of clock cycles necessary for executing said driver software is smaller than the number of clock cycles necessary for executing said software.
